Europäisches Patentamt

European Patent Office

Office européen des brevets

(19)

(11) **EP 1 166 090 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **00925151.3**

(22) Anmeldetag: **31.03.2000**

(51) Int Cl.7: **G01N 21/47**, G01B 11/30

(86) Internationale Anmeldenummer:
**PCT/EP2000/002894**

(87) Internationale Veröffentlichungsnummer:
**WO 2000/058713 (05.10.2000 Gazette 2000/40)**

(54) **GERÄT ZUR SCHNELLEN MESSUNG WINKELABHÄNGIGER BEUGUNGSEFFEKTE AN FEINSTRUKTURIERTEN OBERFLÄCHEN**

DEVICE FOR RAPIDLY MEASURING ANGLE-DEPENDENT DIFFRACTION EFFECTS ON FINELY STRUCTURED SURFACES

DISPOSITIF PERMETTANT DE MESURER RAPIDEMENT LA DIFFRACTION ANGLE-DEPENDANTE SUR DES SURFACES FINEMENT STRUCTUREES

(84) Benannte Vertragsstaaten:
**DE**

(30) Priorität: **31.03.1999 DE 19914696**

(43) Veröffentlichungstag der Anmeldung:
**02.01.2002 Patentblatt 2002/01**

(73) Patentinhaber:
• **Infineon Technologies SC300 GmbH & Co. KG**
  **01099 Dresden (DE)**
• **Fraunhofer-Gesellschaft zur Förderung der angewandten Forschung e.V.**
  **80686 München (DE)**

(72) Erfinder:
• **BENESCH, Norbert**
  **D-90411 Nuernberg (DE)**

• **SCHNEIDER, Claus**
  **D-91088 Bubenreuth (DE)**
• **PFITZNER, Lothar**
  **D-91054 Erlangen (DE)**

(74) Vertreter: **Epping - Hermann - Fischer**
  **Ridlerstrasse 55**
  **80339 München (DE)**

(56) Entgegenhaltungen:
**EP-A- 1 035 408          WO-A-99/14575**
**DE-A- 3 626 724          DE-A- 19 824 624**
**US-A- 4 655 592          US-A- 5 048 970**
**US-A- 5 637 873**

EP 1 166 090 B1

## Beschreibung

Die Erfindung betrifft ein Gerät zur schnellen Messung winkelabhängiger Beugungseffekte an feinstrukturierten Oberflächen im Submikrometerbereich.

Speziell bei der Halbleiterfertigung müssen während des Fertigungsprozesses häufig Linienbreiten und -profile von strukturierten Schichten kontrolliert werden. Für die Funktionsfähigkeit eines Produkts ist die exakte Einhaltung der Spezifikationen für die Linienbreite von ausschlaggebender Bedeutung. Daneben sind noch weitere Strukturparameter wie z. B. Grabentiefe oder Seitenwandschräge von großer Wichtigkeit. Zur Kontrolle dieser Fertigungsparameter auf Lithographiemasken, Halbleiterscheiben oder anderen feinststrukturierten Oberflächen sind geeignete Meßgeräte erforderlich.

Stand der Technik: Bei den heute in der Halbleiterfertigung verwendeten kleinsten Strukturbreiten im Bereich von 0,25 μm sind konventionelle optische Linienbreitenmeßgeräte aufgrund von Beugungs- und interferenzeffekten nicht mehr einsetzbar. Für die Profilmessung feiner Strukturen (< 1 μm) werden daher Elektronenmikroskope verwendet. Aufgrund der hohen Vakuumanforderungen besitzen selbst sehr aufwendige und speziell für die Linienbreitenmessung entwickelte Elektronenmikroskope einen vergleichsweise geringen Durchsatz. Infolgedessen kann nach einem Fertigungsschritt nur ein kleiner Teil der Produktscheiben auf die Einhaltung der Prozeßspezifikationen hin überprüft werden. Die langen Meßzeiten erhöhen darüber hinaus die Wahrscheinlichkeit, daß bis zum Detektieren eines Prozeßfehlers weitere Lose fehlerhaft gefertigt werden. Insbesondere bei den neuesten Fertigungstechnologien mit Scheibendurchmessern von 300 mm und sehr aufwendigen Prozeßschritten können diese Totzeiten zu großen finanziellen Einbußen führen. Im übrigen können mit Elektronenmikroskopen auf jeder Scheibe nur wenige Einzelstrukturen kontrolliert werden, so daß die Messungen nicht repräsentativ sind. Unter Umständen werden daher Fertigungsfehler bzw. deren Ursachen erst sehr spät erkannt. Zur Überprüfung weiterer Strukturparameter werden - z. B. bei Abscheideprozessen - sog. Monitorwafer mitgeführt, um erzeugte Schichtdicken auf unstrukturierten Scheiben bestimmen zu können oder um mit dem Elektronenmikroskop sog. crosssection-Aufnahmen zu ermöglichen, für die die Halbleiterscheiben zerstört werden müssen. Vor allem bei den künftigen großen Scheibendurchmessern von 300 mm und darüber verursachen diese Monitorscheiben hohe Kosten, zum einen aufgrund des reinen Materialwertes, zum anderen, weil durch sie der Durchsatz an Produktscheiben deutlich reduziert wird. Um mit möglichst wenigen Monitorscheiben auszukommen und dennoch die Produktkontrolle zu verbessern, benötigt man in der Halbleiterfertigung kostengünstige Meßverfahren zur zerstörungs- und kontaminationsfreien Überprüfung von Strukturparametern auf den Produktscheiben. Die Meßgeschwindigkeit sollte dabei so hoch sein, daß z.B. nach einem kritischen Prozeßschritt jede Produktscheibe ohne signifikante Erhöhung der Prozeßzeit kontrolliert werden kann. Einen Lösungsansatz bietet die Streulichtmessung. Im allgemeinen wird bei diesem Verfahren der zu untersuchende Meßbereich beleuchtet und aus den Merkmalen des reflektierten Lichts auf die Oberflächeneigenschaften des Meßbereichs geschlossen. Befinden sich auf dem Substrat periodische Strukturen und wird kohärentes Licht verwendet, so treten bei entsprechender Wahl der Wellenlänge Beugungs- und Interferenzeffekte auf. Diese verhindern bei konventionellen optischen Geräten eine Messung, bei der Streulichtmessung bzw. Beugungsanalyse werden sie jedoch explizit erfaßt und ausgewertet, da sie für die Strukturgrößen charakteristisch sind. In der Forschung hat das sog. 2θ-Verfahren während der letzten Jahre eine gewisse Bedeutung erlangt. Dabei wird der Einfallswinkel des Meßstrahls innerhalb der Einfallsebene variiert und die Intensitäten der Beugeordnungen werden in Abhängigkeit des Einfallswinkels gemessen. Mit Hilfe aufwendiger Modellrechnungen ist es möglich, aus dieser Beugungsmessung verschiedene Strukturgrößen wie Linienbreite, Grabentiefe oder Kantenschräge zu bestimmen. Die bisher zu diesem Zweck eingesetzten Meßanordnungen sind jedoch wenig flexibel oder vergleichsweise langsam, konstruktiv aufwendig und teuer.

Bei bisherigen Realisierungen wird die Lichtquelle mit präzisen mechanischen Komponenten bewegt oder die zu untersuchende Probe wird selbst um den Meßpunkt gedreht. Dadurch entstehen hohe Gerätekosten und der Einsatzbereich des Verfahrens wird eingeschränkt. Es werden z. B. Linsensysteme für die Erzeugung unterschiedlicher Einfallswinkel verwendet, so daß lediglich ein optisches Element (z. B. Spiegel oder Prisma) nicht aber die Probe nicht bewegt werden muß. Allerdings können auch mit aufwendigen Linsenanordnungen mit großer Apertur nur begrenzte Einfallswinkel realisiert werden. Zudem treten an den Grenzflächen u. U. störende Reflexionen auf.

Eine simultane Erzeugung mehrerer Einfallswinkel mit Hilfe eines Mehrfachstrahlteilers (z. B. Reflexionsgitter) in Verbindung mit einem Ellipsoidspiegel wird in DE 198 24 624 vorgeschlagen. Die beim Bau des Meßgeräts getroffene Wahl der Einfallswinkel liegt damit allerdings fest und die Anzahl der gleichzeitig realisierbaren Einfallswinkel ist begrenzt. Vor allem aber überlagern sich die Beugungseffekte an den Probenstrukturen für die unterschiedlichen Einfallswinkel gleichzeitig. Eine winkelabhängige Messung von Beugungsintensitäten ist somit nicht möglich. Die Vorrichtung gemäß DE 198 24 624 ermöglicht dagegen die gleichzeitige Messung unter verschiedenen Beugungswinkeln was bei einem Vergleich der Messung mit einem einzigen simulierten Beugungsmuster vorteilhaft sein kann.

Ein Meßverfahren sollte zerstörungsfrei, kontaminationsfrei, schnell, einfach und robust sein. Einen vielversprechenden Ansatz für die Ermittlung von Strukturparametern bietet die sog. Streulichtmessung: die winkelaufgelöste Intensitätsmessung von Licht, das an einem Substrat gestreut wurde. Im Fall von Proben mit periodischen Strukturen wird reflektiertes oder transmittiertes Licht gebeugt. Reguläre Halbleiterstrukturen, z. B. bei Speicherbausteinen, können als reflektierendes Amplituden- oder Phasengitter aufgefaßt werden. Befindet sich der Gittervektor in der Einfallsebene, so gilt bei gegebenem Einfallswinkel $\theta_i$ folgende Gittergleichung für das Beugemaximum n-ter Ordnung mit dem Ausfallswinkel $\theta_n$

$$\sin \theta_i + \sin \theta_n = n \frac{\lambda}{g}.$$

$\lambda$ beschreibt dabei die Wellenlänge des verwendeten Lichts und g kennzeichnet die Gitterperiode. Neben dem stets vorhandenen direkten Reflex können demnach Beugungsmaxima höherer Ordnung entstehen, falls die Wellenlänge des verwendeten Lichts kleiner ist als die halbe Gitterperiode. Liegt die Größe der untersuchten Strukturen im Bereich der Wellenlänge, so sind die einfachen skalaren Fraunhofer Beugungsgleichungen nicht mehr anwendbar. Stattdessen erfordert eine Simulation der Intensitätsverteilung die Lösung der zugehörigen Maxwellgleichungen mit den für das jeweilige Gitter gültigen Randbedingungen. In den zurückliegenden Jahren wurden dafür effiziente numerische Verfahren entwickelt, wie z. B. die sog. *rigorous coupled wave analysis.* Die auftretenden Nichtlinearitäten lassen allgemein gültige Aussagen nur noch sehr begrenzt zu, weshalb für die Beurteilung von Beugungseffekten an kleinen Strukturen stets der konkrete Einzelfall betrachtet bzw. numerisch berechnet werden muß. Die Intensitäten sowie die Phasen der Beugeordnungen hängen dabei von den Eigenschaften des einfallenden Strahls (Winkel, Polarisation, Wellenlänge), von der untersuchten Gitterstruktur (Gitterperioden, Linienbreite, Linienhöhe, Schichtaufbau, Kantenrundungen, Rauigkeit) und von den Materialeigenschaften des Substrats (Brechungsindex, Absorptionsindex) ab.

Eine Beugungsanalyse nach dem Stand der Technik kann in mehrere Schritte gegliedert werden. Zunächst erfolgt eine Intensitätsmessung des gestreuten bzw. gebeugten Lichts Anschließend wird die gemessene Intensitätsverteilung mit einer simulierten Intensitätsverteilung verglichen, wobei die Gitterparameter in einem vorgegebenen Bereich variiert werden. Diese Simulation des Beugungsvorgangs erfolgt aufgrund von a priori Kenntnis über die Probe. Diejenigen Parameterwerte, die zur besten Übereinstimmung zwischen Messung und Simulation führen, werden als sinnvolle Näherungen der realen Gitterparameter angenommen.

Ferner ist aus der Patentveröffentlichung US-A-4 655 592 bekannt, einen in Form eines Zylindermantels gebildeten Spiegel zu verwenden, um eine Probe unter verschiedenen Einfallswinkeln zu bestrahlen.

Gelöste Aufgabe: Der Erfindung liegt die Aufgabe zugrunde ein Gerät zur schnellen winkelabhängigen Beugungsanalyse von Submikrometerstrukturen mit einer vereinfachten Meßanordnung, die die Gerätekosten senkt, den Einsatz als integriertes Meßgerät ermöglicht und die Messung erheblich beschleunigt, zu schaffen.

Gemäß der vorliegenden Erfindung wird die Aufgabe durch die Merkmale des Anspruches 1 gelöst.

Die bevorzugten Ausführungsformen sind Gegenstand der abhängigen Ansprüche.

Gemäß einem neu entwickelten Verfahren der Beugungsanalyse kann der erforderliche Rechenaufwand entscheidend reduziert werden, falls auf eine genaue quantitative Auswertung verzichtet und stattdessen lediglich eine Klassifizierung durchgeführt wird. Eine Menge von Proben wird vermessen und in Klassen eingeteilt, indem für jede Probe deren Beugungsbild aufgezeichnet wird und die Probe mit anderen Verfahren vermessen wird. Die Einteilung von Merkmals- oder Qualitätsklassen erfolgt primär nach den Ergebnissen der anderen Verfahren. Es ist jedoch darauf zu achten, dass die Beugungsbilder von Proben innerhalb einer Klasse ähnlich sind, d.h. die Beugungsbilder der Proben als ähnlich erkennbare Merkmale aufweisen. Eine Beugungs-Vermessung kann also vor einer anderen z.B. zerstörenden Analyse, etwa Elektronenmikroskopie erfolgen, welche dann zu der Klassifizierung führt. So erfolgt eine Zuordnung der Beugungsbilder zu den Merkmals- oder Qualitätsklassen. Die Einteilung von Merkmals- oder Qualitätsklassen und das Auffinden von Merkmalen in den Beugungsbildern zur Beurteilung der Ähnlichkeit gehören zu den Vorbereitungen für die eigentliche Beugungsmessung von unbekannten Proben.

Die Klassifizierung einer unbekannten Probe erfolgt dann durch Vermessung von Proben und Zuordnung des Beugungsbildes in eine Klasse. Solche Proben werden anhand der Messungen mit anderen Verfahren in Qualitätsklassen eingeteilt. Proben innerhalb Klasse haben ähnliche Beugungsbilder. Man kann eine unbekannte Probe anhand ihres Beugungsbildes einer Klasse zuordnen und schließen, dass sie ähnliche physikalische Eigenschaften wie die übrigen Mitglieder dieser Klasse hat.

Die Vorteile dieses Verfahrens liegen darin, dass eine Simulation aus a priori Daten nicht mehr erforderlich ist und dass die Messung und Auswertung während einer laufenden Fertigung mit einer einfachen Meßanordnung zerstörungsfrei und sehr schnell erfolgen kann. Dies ermöglicht die Untersuchung einer großen Probenzahl in kurzer Zeit.

Gegenüber der DE 198 24 624 liefert die vorliegende Erfindung erstmalig eine simultane Erzeugung mehrerer Einfallswinkel mit Hilfe eines Mehrfachstrahlteilers (z. B. Reflexionsgitter) in Verbindung mit einem Ellipsoidspiegel wird in vorgeschlagen. Die beim Bau des Meßgeräts getroffene Wahl der Einfallswinkel liegt damit allerdings fest und die Anzahl der gleichzeitig realisierbaren Einfallswinkel ist begrenzt. Vor allem aber überlagern sich die Beugungseffekte an den Probenstrukturen für die unterschiedlichen Einfallswinkel gleichzeitig. Eine winkelabhängige Messung von Beugungsintensitäten ist somit nicht möglich.

Aufgrund der großen Zahl von Einflußgrößen ist eine eindeutige Bestimmung oder Klassifizierung der Gitterparameter nur möglich, falls eine ausreichende Anzahl von Intensitätsmeßwerten für den untersuchten Meßpunkt zur Verfügung steht. Zu diesem Zweck können ein oder mehrere Parameter des Meßstrahls (Winkel, Polarisation, Wellenlänge) variiert und die Intensitäten in Abhängigkeit der variablen Größen gemessen werden. Damit bleibt die Beugungsanalyse auch dann für eine Struktur-Charakterisierung anwendbar, falls wegen kleiner Gitterperioden nur wenige oder keine Beugeordnungen abgesehen vom direkten Reflex auftreten (siehe Gittergleichung).

Eine Einrichtung zur Messung winkelabhängiger Beugungseffekte besteht aus einer kohärenten Strahlungsquelle, einer Einrichtung zur Umlenkung der kohärenten Strahlung in unterschiedliche Richtungen, einer Spiegelanordnung, welcher die umgelenkte Strahlung zu einem Probenort lenkt, und einer Detektoreinheit zur Intensitätsmessung der an einer Probe gebeugten Strahlung. Die in unterschiedliche Richtungen umgelenkte Strahlung wird derart von der Spiegelanordnung reflektiert, daß der kohärente Strahl zeitlich hintereinander sequentiell mit unterschiedlichen Einfallswinkeln auf die Probe umgelenkt wird.

Der Einfallswinkel des Meßstrahls wird dazu kontinuierlich bzw. in kleinen Schritten verändert. Die Intensitäten des direkten Reflexes (nullte Beugeordnung) sowie der gegebenenfalls auftretenden höheren Beugeordnungen werden gemessen. Die Auswertung der Intensitätsverläufe in Abhängigkeit des variierten Einfallswinkels läßt Rückschlüsse auf Form und Material der untersuchten periodischen Strukturen zu.

Bei der vorliegenden Erfindung wird erstmals ein elektrisch rotierender und geregelter Spiegel (sog. Galvanometer-Scanner) in Verbindung mit einer feststehenden, nicht-planaren Spiegeloberfläche verwendet, um den Einfallswinkel des Meßstrahls für eine 26-Beugungsanalyse eines festen Meßpunkts zu variieren. Die Meßanordnung ermöglicht das Anfahren großer Winkelstellungen innerhalb von Millisekunden mit einer Genauigkeit von wenigen µrad. Damit kann eine vollständige Messung mit Variation des Einfallswinkels innerhalb von einigen zehntel Sekunden durchgeführt werden. Darüber hinaus wird für die Erzeugung der unterschiedlichen Einfallswinkel nur ein robustes bewegliches Bauteil (Galvanometer-Scanner) benötigt und somit die Störanfälligkeit reduziert. Die Kosten der verwendeten Komponenten sowie der für den Meßaufbau erforderliche Raumbedarf sind vergleichweise gering. Da die verschiedenen Einfallswinkel sequentiell erzeugt werden, existiert zu jedem Zeitpunkt genau ein einfallender Meßstrahl. Eine Überlagerung von Beugeordnungen tritt somit nicht auf. Unabhängigkeit von der Art der untersuchten Struktur können die Intensitäten aller mit dem Detektor erfaßbaren Beugemaxima gemessen und zugeordnet werden. Die annähernd konstante Intensität des Meßstrahls unabhängig vom Einfallswinkel (im Gegensatz zu DE 198 24 624 A1) erhöht die Meßgenauigkeit des Systems. Gleiches gilt für die ausschließliche Verwendung von Spiegelflächen anstelle von Linsen mit optischen Abbildungsfehlern.

Die vorliegende Erfindung wird im Folgenden unter Bezugnahme auf die Zeichnungen detailliert beschreiben. Es zeigen

Fig. 1 in schematischer geschnittener Ansicht eine Einrichtung mit deren Hilfe der lotrechte Einfallswinkel variiert werden kann;

Fig. 2 in schematischer perspektivischer Ansicht eine Einrichtung mit indirekter Intensitätsmessung mit einem Spiegel;

Fig. 3. in schematischer perspektivischer Ansicht eine Einrichtung gemäß der Erfindung bei der der Azimut des Meßstrahls gegenüber der Probenoberfläche variiert;

Fig. 4 in schematischer perspektivischer Ansicht eine Meßeinrichtung gemäß der Erfindung dargestellt.

Es werden Meßanordnungen vorgestellt, mit der der Einfallswinkel (lotrechter oder azimutaler Winkel) des Meßstrahls auf einen bestimmten Punkt der Probe sehr schnell, präzise und kostengünstig über einen großen Bereich variiert werden kann. Je nach Art des eingesetzten Detektorsystems werden zu jedem Einfallswinkel nur der direkte Reflex oder zusätzlich auch höhere Beugeordnungen gemessen.

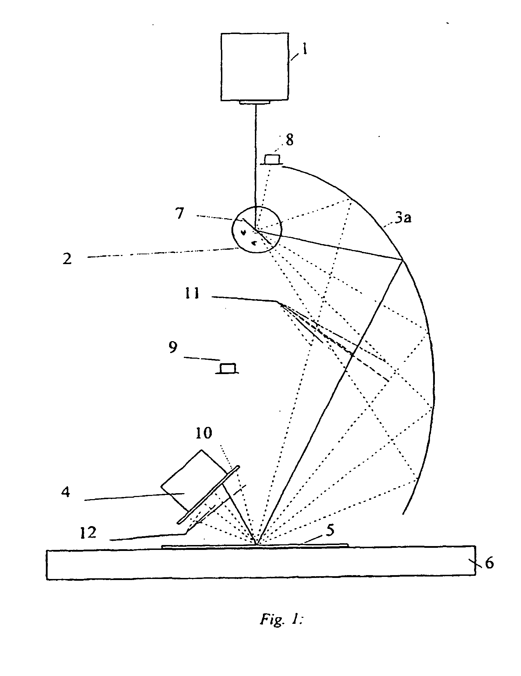

In Fig. 1 wird eine Einrichtung dargestellt mit deren Hilfe der lotrechte Einfallswinkel φ (in der Einfallsebene bzw. der Zeichnungsebene) variiert werden kann. Eine Lichtquelle (1), z. B. ein Laser, erzeugt kohärentes Licht. Über Faseroptiken oder direkt wird der Meßstrahl zu einer Meßanordnung geleitet. Dort trifft der Meßstrahl - eventuell mit Hilfe eines Umlenkspiegels - auf eine Einrichtung zur Umlenkung (2) in unterschiedliche Richtungen z. B. eine rotierbare Spiegelfläche (7). Die Rotationsachse der Spiegelfläche steht lotrecht auf der Einfallsebene des Meßstrahls. Die Rotation des Spiegels erfolgt elektrisch auf wenige µrad genau geregelt, bevorzugt mit Hilfe eines sogenannten Galvanometer Scanners. Vom Scanner-Spiegel aus trifft der abgelenkte Meßstrahl auf einen Ellipsoidspiegel (3a). Befindet sich der Schnittpunkt des Meßstrahls mit dem Scanner-Spiegel im Brennpunkt des Ellipoidspiegels so kommt eine spezielle Eigenschaft des Ellipsoidspiegels zum Tragen: er besitzt zwei Brennpunkte. Die Lichtstrahlen für unterschiedliche Galvanometer-Winkel treffen sich daher in einem Punkt. Wird der Ort der Probe so gewählt, daß der Meßpunkt mit dem zweiten Brennpunkt übereinstimmt, so wird der feste Meßpunkt durch Rotation des Scanner-Spiegels mit variablen Einfallswinkeln bestrahlt. Da der Scanner bestimmte Winkelstellungen innerhalb weniger Millisekunden erreicht, kann der Meßstrahl (11) sehr schnell einen großen Winkelbereich durchfahren und die für eine Beugungsanalyse erforderliche Parametervariation des Meßstrahls realisieren. Der ellipsoide Form des Spiegels kann aus einzelnen Segmenten zusammengesetzt werden und der Ellipsoidspiegel kann als Rotationskörper ausgeformt sein, so daß auch bei azimutalen Winkelabweichungen (z. B. Drehung des Scanners um die Achse des einfallenden Meßstrahls) die Meßstrahlen im Meßpunkt gebündelt werden. Die Spiegeloberfläche des Galvanometer-Scanners muß im Mittelpunkt der Drehachse liegen, damit sich der Reflexionspunkt stets im Brennpunkt des Ellipsoidspiegels befindet. Ist diese Voraussetzung nicht gegeben, so überstreicht der Meßstrahls während der Änderung des Einfallswinkels einen gewissen Bereich der Probenoberfläche um den zentralen Meßpunkt. Für bestimmte Anwendungen kann dies erwunscht sein, um den Meßbereich zu vergrößern ohne den Durchmesser des Meßstrahls zu verändern.

Der kohärente Meßstrahl wird an den periodischen Strukturen der Probe (5) gebeugt. Liegt der Gittervektor - er kennzeichnet die Richtung der Periodizität der Gitterstrukturen - in der Einfallsebene, so befinden sich eventuell auftretende höhere Beugeordnungen ebenfalls in der Einfallsebene. Ist diese Voraussetzung nicht erfüllt, so tritt sogenannte ‚konische Beugung auf und alle Beugemaxima abgesehen vom direkten Reflex liegen auf einem Bogen senkrecht zur Einfallsebene, d. h., die Beugemaxima liegen nicht mehr in der Zeichnungsebene. Im Fall nichtkonischer Beugung kann die Messung der Intensitäten der gebeugten Strahlung (12) mit einer Detektoreinheit, welche eine Photodiodenzeile (10) enthält, erfolgen, die in der Zeichnungsebene schräg über der Probe liegt. Ist die Anzahl der Einzeldioden groß genug, so können die einzelnen Intensitäten aller erfaßbaren Beugemaxima gemessen werden. Da ein mit Photodioden gemessener Intensitätswert vom Einfallswinkel eines Lichtstrahls auf die Diodenoberfläche abhängt, muß das Diodenarray entsprechend kalibriert werden. Alternativ können mehrere Einzeldioden auf einem Halbkreis um den Meßpunkt angeordnet werden. Die Beugeordnungen treffen dann stets senkrecht auf die Photodioden. Eine weitere Möglichkeit besteht in der Verwendung einer einzigen großflächigen Photodiode. Als Meßwert erhält man in diesem Fall die Summenintensität der gebeugten Lichtstrahlen, die ebenfalls zur Berechnung oder Klassifizierung der Strukturparameter auf der Probe verwendet werden kann.

Um die Genauigkeit der Meßanordnung zu erhöhen, kann das Rauschen der Lichtquelle durch wiederholte Referenzmessungen kompensiert werden. Dazu wird entweder der von der Lichtquelle ausgehende Strahl geteilt (z. B. mit einem optischen Strahlteiler) und die Intensität eines Strahls mit einem Photometer bzw. einer Photodiode gemessen. Optional kann dieser Strahlungsdetektor (8) auch so angeordnet werden, daß der Meßstrahl bei einer bestimmten Winkelstellung des Galvanometers auf sie trifft (eventuell auch über einen Umlenkspiegel). Eine vorhergehende Strahlteilung entfällt dann.

Das Meßverfahren reagiert sehr empfindlich auf Änderungen des Einfallswinkels, wie sie z. B. durch Verkippen oder Welligkeit des zu untersuchenden Substrats auftreten. Mit Hilfe eines PSD (position sensitive device') (9), das bei einem bestimmten Einfallswinkel vom direkten Reflex getroffen wird kann eine derartige Verkippung festgestellt und bei der Meßdatenauswertung berücksichtigt werden. Alternativ kann der Winkelfehler auch durch ein Piezoelement, das die Lage der Probe bestimmt, korrigiert werden. Mit Hilfe eines xy-Meßtisches (6) können verschiedene Meßpunkte auf der Probe angefahren werden. Optional kann die Probe auch fest liegen und die Spiegel- und Detektoreinheit wird entsprechend verfahren.

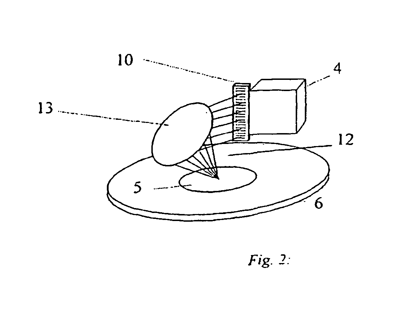

Fig. 2 zeigt, wie darüber hinaus mit einem oder mehreren Spiegeln (13) eine indirekte Intensitätsmessung realisiert werden kann. In Frage kommen dafür z. B. planare Umienkspiegel, die u. U. die Konstruktion der Meßanordnung vereinfachen sowie spharische und asphärische Spiegel, mit denen die Beugeordnungen fokusiert werden können Der erfaßbare Winkelbereich kann somit vergrößert werden bzw. die erforderlichen Abmessungen der Photodiodenzeile (10) können verringert werden. Für den Fall konischer Beugung können für die Messung von Beugemaxima rechteckige bzw. quadratische Photodiodenarrays oder CCDs eingesetzt werden. Um einen großen Raumwinkelbereich zu erfassen wird man hierfür meist einen Spiegel für die Fokussierung des Beugebildes auf das Detektorarray einsetzen. Der Spiegel für die Umlenkung der Beugungseffekte kann im übrigen auch aus einzelnen Segmenten bestehen.

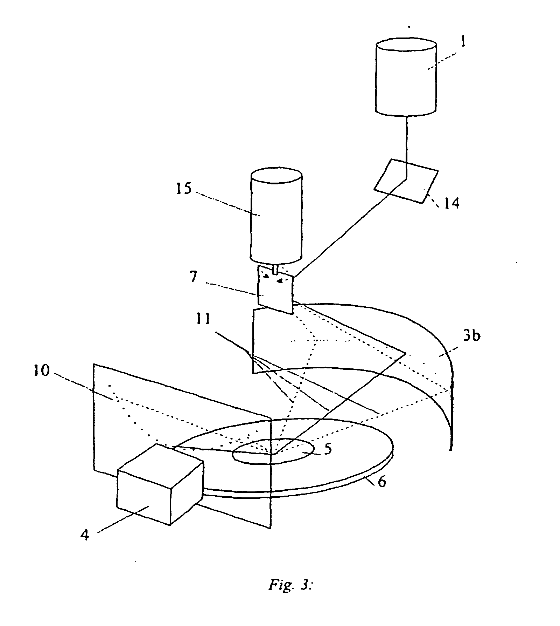

In Fig. 3. wird der Azimut des Meßstrahls gegenüber der Probenoberfläche variiert. Die Intensitätsverläufe der Beugemaxima in Abhängigkeit des Azimutwinkels dienen wiederum einer Charakterisierung der Probenoberfläche. Wie in der zuvor beschriebenen Anordnung wird eine kohärente Lichtquelle (1), eventuell in Verbindung mit einer Faseroptik und/oder Umlenkspiegeln (14) verwendet. Wiederum wird mit Hilfe eines Galvanometer-Scanners (15) der Meßstrahls in verschiedene Richtungen reflektiert. Wird die Anordnung der Komponenten entsprechend Fig. 3 gewählt und befindet sich der Schnittpunkt von Meßstrahl und Scanner-Spiegel im Radiusmittelpunkt bzw. Brennpunkt eines konzentrischen Spiegels (3b) (oder Spiegelsegmenten), so treffen sich die abgelenkten Meßstrahlen (11) unter verschiedenen Winkeln wieder in einem Punkt, der als Meßpunkt gewählt wird.

Da sich in diesem Fall die Lage der Einfallsebene ändert, tritt bei periodisch strukturierten Substraten (Probe (5)) stets konische Beugung auf. Der direkte Reflex nullter Ordnung verläuft auf einer Kegeloberfläche deren Spitze den Meßpunkt bildet. Falls ein ebenes Array aus Photodioden (10) für die Intensitätsmessung der nullten Beugeordnung eingesetzt wird, müssen sich daher die einzelnen Dioden entlang einer entsprechend gekrümmten Linie befinden. Alternativ könnte auch ein rechteckiges Diodenarray oder ein CCD verwendet werden, um eine ortsaufgelöste Intensitätsmessung vorzunehmen. Damit können auch höhere Beugeordnungen gemessen und zugeordnet werden. Wie für den Fall der ersten Meßanordnung beschrieben, besteht darüber hinaus wieder die Möglichkeit, planare, sphärische oder asphärische Spiegel zur Umlenkung oder Fokussierung der Beugeeffekte einzusetzen.

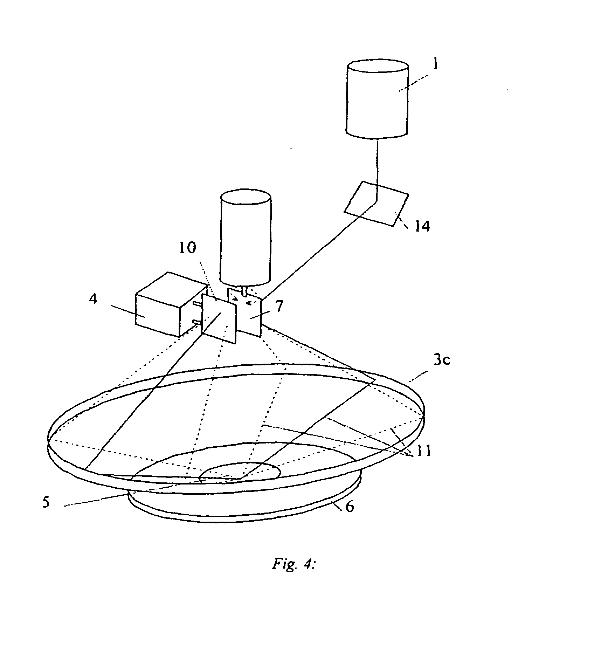

In Fig. 4 ist eine weitere Variante der Meßeinrichtung dargestellt. Als Reflexionsspiegel wird der gleiche oder ein ähnlicher Spiegel mit anderem Radius eingesetzt wie für die Ablenkung der Meßstrahlen auf die Probe. Als Sonderfall können beide Spiegel kombiniert werden und einen innen verspiegelten Ring (3c) bilden. Die von der Probe (5) reflektierten nullten Beugeordnungen werden je nach Realisierung in der Nähe des Scanner-Spiegels gebündelt. Wird davor eine großflächige Photodiode (10) eingebracht, so kann die Intensität der nullten Beugeordnung gemessen werden, wobei die Diode für verschiedene Einfallswinkel kalibriert werden muß. Der Höhe des Spiegelrings (3c) sollte bei dieser Realisierung möglichst klein gewählt werden. Da höhere Beugeordnungen unter anderen Raumwinkels auftreten, kann somit erreicht werden, daß i.a. nur die Intensität der nullten Beugeordnung gemessen wird. Bei bestimmten Strukturformen ist u. U. nur eine Summenmessung mehrerer Beugeordnungen möglich. Auch diese führt aber zu Meßergebnissen, die eine Charakterisierung der Probe erlauben.

In Bezug auf Referenzmessungen der Intensität der Lichtquelle, dem Einsatz von PSD-Elementen und dem Verfahren von Meßtisch oder Meßaufbau gelten die für den ersten Meßaufbau getroffenen Aussagen.

Eine weitere Variante der beschriebenen Meßanordnungen besteht in der Verwendung eines mikrooptischen Moduls zur Strahlablenkung, wie z. B. in EP 0712505 81 vorgeschlagen. Damit kann die mechanisch bewegte Scanner-Komponente ersetzt werden. Die Winkeländerung des Meßstrahls wird hierbei durch Ausnutzen elektro-optischer Eigenschaften geeigneter Materialien erreicht. Kennzeichnend für die Meßanordnung bleibt die sequentielle Erzeugung unterschiedlicher Einfallswinkel mit Hilfe eines sphärischen oder asphärischen Spiegels bzw. mit Hilfe von Spiegelsegmenten.

Eine weitere Vereinfachung der Meßanordnung ergibt durch die Verwendung der Rückseite des Scannerspiegels. Dazu werden die vom Substrat reflektierten Strahlen mit Hilfe der gleichen Spiegelform gebündelt, die im ersten Schritt für die Fokussierung nach der Strahlablenkung mit dem Scanner verantwortlich ist. Entfernt man z. B. in Fig. 4 die Photodiode, so treffen sich die reflektierten Strahlen in einem Punkt auf der Rückseite des Scannerspiegels. Von diesem Punkt aus laufen die Strahlen in stets gleicher Richtung in Verlängerung des auf den Scannerspiegel einfallenden Strahls. In den reflektierten Strahl kann nun eine Photodiode eingebracht werden, wobei der Einfallswinkel des Meßstrahls auf die Photodiode unabhängig von der Stellung des Scanner-Spiegels konstant bleibt. Das gleiche Prinzip ist auch für die Variation des Einfallswinkels in der Einfallsebene in Fig. 1 möglich. Auf der zum ersten Spiegel gegenüberliegenden Seite realisiert ein gleichartiger Ellipsoidspiegel die Fokussierung der reflektierten Strahlen auf die Scanner-Spiegelrückseite. Von dort aus laufen die Strahlen in Verlängerung des von der Lichtquelle einfallenden Meßstrahls. Vorteilhaft ist auch in diesem Fall, daß die Intensitäten mit einer einzigen Photodiode gemessen werden können, wobei der Einfallswinkel auf die Photodiode praktisch konstant bleibt.

In einem Verfahren zur Messung winkelabhängiger Beugungseffekte, wird zunächst ein kohärenter Strahl erzeugt. Dieser erfährt ein erstes Umlenken zeitlich hintereinander sequentiell in unterschiedliche Richtungen. Anschließend erfolgt ein zweites Umlenken des kohärenten Strahles auf eine Probe. Durch Beugen des kohärenten Strahls an der Probe wird ein gebeugter Strahl erzeugt. Dieser gebeugte Strahl wird detektiert. Mit diesem Verfahren kann die vorbeschriebene Vorrichtung betrieben werden.

Vorzugsweise wird ein der Richtung des ersten Umtenkens entsprechendes Signal und ein dem detektierten gebeugten Strahl entsprechenden Signales erzeugt und diese beiden Signale werden einander zugeordnet. Dies ermöglicht eine winkelabhängige Beugungssignaleriassung. Ein so erhaltenes winkelabhängiges Beugungssignal ist charakteristisch für eine Probenklasse und ermöglicht die Klassifizierung einer unbekannten Probe.

**Patentansprüche**

1. Vorrichtung zur Messung winkelabhängiger Beugungseffekte, umfassend

   - eine kohärente Strahlungsquelle (1),

   - eine Einrichtung zur Umlenkung der kohärenten Strahlung (2) in unterschiedliche Richtungen, welche aus einem elektrisch geregelt rotierendem Spiegel (7) mit einer Rotationsachse oder einem mikrooptischen oder elektrooptischen Modul besteht, .

- einen in Form eines Zylindermantels oder in Form eines Segmentes eines Zylindermantels gebildeten Spiegel (3b) mit einer Symmetrieachse,

- einer Detektoreinheit (4) zur Intensitätsmessung der an einer Probe gebeugten Strahlung,

wobei

- die Einrichtung zur Umlenkung des kohärenten Strahls auf der Symmetrieachse des Spiegels (3b) angeordnet ist, und im Falle des rotierenden Spiegels (7) als Einrichtung zur Umlenkung (2) die Rotationsachse mit der Symmetrieachse zusammenfällt, und der kohärente Strahl stets in denselbem Punkt auf der Symmetrieachse auf den rotierenden Spiegel (7) trifft,

- der Spiegel (3b) die hintereinander sequentiell unterschiedlich gerichteten Strahlen der Einrichtung zur Umlenkung der kohärenten Strahlung (2) reflektiert,

- die Probe zur Bestrahlung unter verschiedenen Einfallswinkeln in einem Meßpunkt auf der Symmetrieachse des Spiegels (3b) derart angeordnet ist, dass die durch den Spiegel (3b) reflektierten Strahlen unter verschiedenem Einfallswinkeln auf die Probe in dem Meßpunkt treffen.

2. Vorrichtung nach Anspruch 1, **dadurch gekennzeichnet, daß** sich der Meßpunkt auf der Probe auf der Symmetrieachse des Spiegels (3b) spiegelbildlich im gleichen Abstand von einem Mittelpunkt auf der Symmetrieachse befindet wie die Einrichtung zur Umlenkung des kohärenten Strahls (2), wobei der Mittelpunkt durch einen Kreis oder ein Kreissegment bestimmt ist, welcher durch eine Schnittlinie der von der Einrichtung (2) in unterschieldiche Richtungen umgelenkten Strahlung mit dem zylinderförmigen Spiegel (3b) beschrieben ist.

3. Vorrichtung nach einem der Ansprüche 1 oder 2, **dadurch gekennzeichnet, daß** eine Photodiodenzeile oder mehrere Einzeldioden oder eine einzige großflächige Photodiode oder Photodiodenarrays oder CCDs Bestandteil der Detektoreinheit (10) sind.

4. Vorrichtung nach einem der Ansprüche 1 bis 3, **dadurch gekennzeichnet, daß** die an der Probe gebeugte Strahlung (12) durch Umlenken mit einem oder mehreren Spiegeln (13) indirekt auf die Detektoreinheit auftrifft.

5. Vorrichtung nach Anspruch 4, **dadurch gekennzeichnet, daß** die Form der Spiegel (13), mit welcher die gebeugte Strahlung indirekt auf die Detektoreinheit gelenkt wird, die gleiche oder eine ähnliche Form wie der Spiegel (3b) zur Variation des Strahlungseinfallswinkels auf die Probe hat.

6. Vorrichtung nach Anspruch 5, **dadurch gekennzeichnet, daß** die Spiegel (13, 3b) zu einem verspiegelten Ring (3c) zusammengefaßt sind.

7. Vorrichtung nach einem der Ansprüche 5 oder 6, **dadurch gekennzeichnet, daß** der elektrisch geregelt rotierende Spiegel (7) zu einer weiteren Umlenkung der gebeugten Strahlung auf das Detektorelement genutzt wird.

8. Vorrichtung nach einem der Ansprüche 1 bis 7, **dadurch gekennzeichnet daß** die Vorrichtung einen Strahlungsdetektor (8), welcher bei einer bestimmten Winkelstellung der Einrichtung zur Umlenkung vom Strahl, oder durch Teilen des kohärenten Strahls mit einem Strahlteiler, von einem Teilstrahl, getroffen wird.

9. Vorrichtung nach einem der Ansprüche 1 bis 8, **dadurch gekennzeichnet, daß** eine Änderung des Einfallswinkels durch eine Verkippung oder Oberflächenwelligkeit der Probe, mit einem PositionSensitiveDevice (9) oder einem CCD festgestellt und bei der Meßdatenauswertung berücksichtigt, oder mit einem Piezoelement korrigiert wird.

10. Vorrichtung nach einem der Ansprüche 1 bis 9, **dadurch gekennzeichnet, daß** zur Messung verschiedener Meßpunkte auf einer Probe die Probe mit Hilfe eines xy-Meßtisches oder die Einrichtung gegenüber der Probe positioniert wird.

**Claims**

1. Apparatus for measuring angle-dependent diffraction effects, comprising

- a coherent radiation source (1),
- a device for deflecting the coherent radiation (2) in different directions, which comprises an electrically regulated rotating mirror (7) having an axis of rotation or a micro-optical or electro-optical module,
- a mirror (3b) having an axis of symmetry, formed in the form of an outer surface of a cylinder or in the form of a segment of an outer surface of a cylinder,
- a detector unit (4) for measuring the intensity of the radiation diffracted at a specimen,

wherein

- the device for deflecting the coherent beam is arranged on the axis of symmetry of the mirror (3b), and, in the case of the rotating mirror (7) as the device for deflection (2), the axis of rotation coincides with the axis of symmetry, and the coherent beam always impinges on the rotating mirror (7) at the same point on the axis of symmetry,
- the mirror (3b) reflects the rays of the device for deflecting the coherent radiation (2), which rays are directed differently sequentially one after the other,
- the specimen, for irradiation at different angles of incidence, is arranged at a measurement point on the axis of symmetry of the mirror (3b) in such a way that the rays reflected by the mirror (3b) impinge on the specimen at the measurement point at different angles of incidence.

2. Apparatus according to Claim 1, **characterized in that** the measurement point on the specimen is situated on the axis of symmetry of the mirror (3b), in a mirror image fashion at the same distance from a centre point on the axis of symmetry (2) as the device for deflecting the coherent beam, the centre point being determined by a circle or a circle segment which is described by a line of intersection of the radiation deflected by the device (2) in different directions with the cylindrical mirror (3b).

3. Apparatus according to either of Claims 1 and 2, **characterized in that** a photodiode linear array or a plurality of individual diodes or a single large-area photodiode or photodiode arrays or CCDs are a component part of the detector unit (10).

4. Apparatus according to one of Claims 1 to 3, **characterized in that** the radiation (12) diffracted at the specimen impinges indirectly on the detector unit through deflection by one or more mirrors (13).

5. Apparatus according to Claim 4, **characterized in that** the form of the mirror (13) by which the diffracted radiation is directed indirectly onto the detector unit has the same form as, or a similar form to, the mirror arrangement (3b) for varying the angle of radiation incidence on the specimen.

6. Apparatus according to Claim 5, **characterized in that** the mirrors are combined to form a mirrored ring (3c).

7. Apparatus according to either of Claims 5 and 6, **characterized in that** the electrically regulated rotating mirror (7) is utilized for a further deflection of the diffracted radiation onto the detector element.

8. Apparatus according to one of Claims 1 to 7, **characterized in that** the apparatus has a radiation detector (8), on which, in the case of a specific angular position of the deflection device, the beam impinges or, as a result of the coherent beam being split by a beam splitter, a partial beam impinges.

9. Apparatus according to one of Claims 1 to 8, **characterized in that** a change in the angle of incidence through tilting or surface undulation of the specimen is detected by a position sensitive device (9) or a CCD and taken into account during the evaluation of measurement data, or is corrected by means of a piezoelement.

10. Apparatus according to one of Claims 1 to 9, **characterized in that**, in order to measure different measurement points on a specimen, the specimen is positioned with the aid of an xy measurement table or the device is positioned relative to the specimen.

## Revendications

1. Dispositif de mesure d'effets de diffraction qui dépendent de l'angle, comprenant :

- une source (1) de rayonnement cohérent,
- un dispositif de déviation du rayonnement (2) cohérent dans des directions différentes, qui est constitué d'un miroir (7) tournant à réglage électrique ayant un axe de rotation ou d'un module micro-optique ou électro-optique,
- un miroir (3b) sous la forme d'une enveloppe cylindrique ou sous la forme d'un segment d'une enveloppe cylindrique et ayant un axe de symétrie,
- une unité (4) formant détecteur pour mesurer l'intensité du rayonnement diffracté sur un échantillon,

  dans lequel

- le dispositif de déviation du rayonnement cohérent est placé sur l'axe de symétrie du miroir (3b), et dans le cas du miroir (7) tournant, comme dispositif de déviation (2), l'axe de rotation coïncide avec l'axe de symétrie et le rayonnement cohérent arrive toujours au même point sur l'axe de symétrie sur le miroir (7) tournant,
- le miroir (3b) réfléchit les faisceaux, dirigés séquentiellement différemment les uns derrière les autres, du dispositif de déviation du rayonnement (2) cohérent,

- l'échantillon est disposé pour exposition à des angles d'incidence différents en un point de mesure sur l'axe de symétrie du miroir (3b), de sorte que les faisceaux réfléchis par le miroir (3b) arrivent sous des angles d'incidence différents sur l'échantillon au point de mesure.

2. Dispositif suivant la revendication 1, **caractérisé en ce que** le point de mesure sur l'échantillon sur l'axe de symétrie du miroir (3b) se trouve de façon symétrique comme en un miroir à la même distance d'un centre sur l'axe de symétrie que le dispositif de déviation du rayonnement (2) cohérent, le centre étant déterminé par un cercle ou par un segment de cercle qui est décrit par une ligne de coupe du rayonnement dévié dans des directions différentes par le dispositif (2) avec le miroir (3b) en forme de cylindre.

3. Dispositif suivant l'une des revendications 1 ou 2, **caractérisé en ce qu'**une ligne de photodiodes ou plusieurs diodes individuelles ou une photodiode unique de grande surface ou des réseaux de photodiodes ou des CCD font partie de l'unité (10) formant détecteur.

4. Dispositif suivant l'une des revendications 1 à 3, **caractérisé en ce que** le rayonnement (12) diffracté sur l'échantillon arrive indirectement sur l'unité formant détecteur en étant dévié par un ou par plusieurs miroirs (13).

5. Dispositif suivant la revendication 4, **caractérisé en ce que** la forme du miroir (13) par lequel le rayonnement diffracté est dévié indirectement sur l'unité formant détecteur est la même que celle du miroir (3b) de variation de l'angle d'incidence du rayonnement sur l'échantillon ou est analogue.

6. Dispositif suivant la revendication 5, **caractérisé en ce que** les miroirs (13, 3b) sont rassemblés en un anneau (3c) réfléchissant.

7. Dispositif suivant l'une des revendications 5 ou 6, **caractérisé en ce que** le miroir (7) tournant à réglage électrique est mis à profit pour une déviation supplémentaire du rayonnement diffracté sur l'élément formant détecteur.

8. Dispositif suivant l'une des revendications 1 à 7, **caractérisé en ce que** le dispositif a un détecteur (8) de rayonnement qui, pour une certaine position angulaire du dispositif de déviation, est rencontré par le faisceau ou grâce à des parties du faisceau cohérent avec un diviseur de faisceau par un faisceau partiel.

9. Dispositif suivant l'une des revendications 1 à 8, **caractérisé en ce qu'**une modification de l'angle d'incidence par un basculement ou par une ondulation de surface de l'échantillon est fixée par un dispositif (9) sensible à la position ou par un CCD et est prise en compte lors de l'exploitation des données de mesure ou est corrigée par un piézoélément.

10. Dispositif suivant l'une des revendications 1 à 9, **caractérisé en ce que** pour la mesure de divers points de mesure sur un échantillon, l'échantillon est mis en position à l'aide d'une table de mesure xy ou le dispositif est mis en position par rapport à l'échantillon.

*Fig. 1:*

Fig. 2:

*Fig. 3:*

*Fig. 4:*